# EUROPEAN PATENT APPLICATION

(11) **EP 3 037 983 A1**
(43) Date of publication of application: **29.06.2016**
(21) Application number: 13891820.6
(22) Date of filing: 21.08.2013
(51) Int. Cl.: G06F 17/30, G06F 12/00

(54) **DATA PROCESSING SYSTEM, DATA PROCESSING METHOD, AND DATA PROCESSING DEVICE**

(71) Applicant: Hitachi, Ltd., Chiyoda-ku Tokyo 100-8280 (JP)
(72) Inventor: AKITOMI, Tomoaki, Tokyo 100-8280 (JP); YANO, Kazuo, Tokyo 100-8280 (JP); KUDO, Fumiya, Tokyo 100-8280 (JP)
(74) Representative: Moore, Graeme Patrick
(86) International application number: PCT/JP2013/072320
(87) International publication number: WO 2015/025386

(57) **Abstract**

A data processing system for processing data of multiple table formats partially including synonymous data includes: a first processing unit that automatically combines the data of the multiple table formats together; and a second processing unit that converts the data so that the data combined in the first processing unit is unique to a column in specific data. More preferably, the data processing system further includes first information indicative of a relationship between data defined by a user, and second information indicative of a column to be analyzed which is defined by the user. The first processing unit performs a process of combining the data of the multiple table formats together with the use of the first information, and the second processing unit converts the data so that the combined data is unique to the column in the specific data with the use of second information.

## Description

### BACKGROUND

The present invention relates to a technique in which, in relational data stored in multiple tables, separately, those tables can be integrated into one table and treated, and particularly with the deformation of the integrated one table, the tables are deformed into a form suitable for user's analysis.

In recent years, with the effective utilization of a large amount of information in a society called "BIGDATA", the development of a system for supporting decision making carried out by a person with intuition and experience up to now has been rapidly evolved. Many of the decision making support systems have a basic function for finding out what an explanatory variable for varying an objective variable of interest to a user is from the data. In order to perform such analysis, it is assumed that the objective variable and the explanatory variable in the data are acquired with the same axis. For example, when sales factors of a certain shop are to be analyzed with customers as an axis, data to be input needs to be arranged for each customer. A technique for deforming the data according to an analysis axis into a form desired by the user has been proposed in response to such needs.

For example, WO2010/013473 discloses a technique in which there is provided a database that stores classification hierarchies of data in association with their hierarchical relationships in tables, and accumulates correspondence relationships between classification items and data in advance, and an index calculation unit receives classification axis candidates, calculates a priority of the classification axis candidates with reference to the classification hierarchies and information stored in the database, and outputs the number of data along that axis.

### SUMMARY

When the technique disclosed in WO2010/013473 is applied to a purpose for deforming data according to the analysis axis, there arise the following problems.

First, in the technique of WO2010/013473, input data needs to be arranged in the format of one relational table already associated. In other words, when the multiple tables are present, data cannot be output according to a certain desired axis with the integration of those tables.

Second, even if data can be deformed into the desired axis, there arises such a problem that a large amount of information of original data is lost. In the technique of WO2010/013473, when data is deformed into a shape corresponding to the desired axis, only information on only the number of data classified by the axis remains. In the example of the above background, data can be arranged for each of the customers, but the remaining information is only information on the number of data corresponding to each customer. However, because the objective variable and the explanatory variable are analyzed after the data has been originally deformed for each customer, it is important that the explanatory variable has a large amount of information of original data.

Under the circumstances, the present invention has been made to solve the above problems, and a typical object of the present invention is to provide a technique in which multiple tables are deformed into an analysis axis desired by a user and output together while a loss of the amount of information of original data is suppressed.

The above and other objects and novel features of the present invention will become apparent from the description of the present specification and the attached drawings.

A typical outline of the invention disclosed in the present application will be described in brief as follows.

In other words, a typical data processing system processes data of multiple table formats partially including synonymous data. The data processing system includes a first processing unit that automatically combines data of the multiple data formats together and a second processing unit that converts the data so that the data combined by the first processing unit becomes unique to a column of specific data.

More preferably, the data processing system further includes first information indicative of a relationship between data defined by the user. The first processing unit performs a process of combining the data of the multiple table formats together with the use of the first information. The second processing unit converts the data so that the combined data becomes unique to the column of the specific data.

More preferably, the data processing system further includes second information indicative of a column to be analyzed which is defined by the user. Further, the first processing unit performs a process of combining the data of the multiple data formats together with the use of the first information. The second processing unit converts the data with the use of the second information so that the combined data becomes unique to a column of the specific data defined by the user with the use of the second information.

Further, the present invention is applied to a data processing method and a data processing device based on the same gist as that of the data processing system.

The typical advantages obtained by the invention disclosed in the present application will be described in brief below.

In other words, the typical advantages reside in that that multiple tables can be put together, deformed into an analysis axis desired by the user and output while a loss of the amount of information of original data is suppressed.

### BRIEF DESCRIPTION OF THE DRAWINGS

FIG. 1 is a block diagram illustrating an example of a basic configuration of a data processing system according to a first embodiment of the present invention;
FIG. 2 is a block diagram illustrating an example of a detailed configuration of a data processing system more embodying the basic configuration of FIG. 1;
FIG. 3 is a flowchart illustrating an example of processing of a table combination processing unit in the data processing system of FIG. 2;
FIG. 4 is a flowchart illustrating an example of processing of an index creation unit in the data processing system of FIG. 2;
FIG. 5 is a flowchart illustrating an example of a detailed process of a scenario creation step in the index creation unit of FIG. 4;
FIG. 6 is a flowchart illustrating an example of a detailed process of a scenario execution step in the index creation unit of FIG. 4;
FIG. 7 is a flowchart illustrating an example of processing of a compression SQL sentence generation step in the index creation unit of FIG. 4;
FIG. 8 is a diagram illustrating an example of a configuration of an axis information table in the data processing system of FIG. 2;
FIG. 9 is a diagram illustrating an example of a configuration of a tag information table in the data processing system of FIG. 2;
FIG. 10 is a diagram illustrating an example of a configuration of an index information table in the data processing system of FIG. 2;
FIG. 11 is a diagram illustrating an example of a configuration of a unique axis information table in the data processing system of FIG. 2;
FIG. 12 is a diagram illustrating an example of a configuration of an index table list in the data processing system of FIG. 2;
FIG. 13 is a diagram illustrating an example of a configuration of user-defined table related information in the data processing system of FIG. 2;
FIG. 14 is a diagram illustrating an example of a configuration of user-defined analysis axis information in the data processing system of FIG. 2;
FIG. 15 is a diagram illustrating an example of a configuration of a scenario group table in the data processing system of FIG. 2;
FIG. 16 is a diagram illustrating an example of processing for creating the index table from an input table group in the data processing system of FIG. 2;
FIG. 17 is a diagram illustrating an example of processing for creating the index table from an input table group in the data processing system of FIG. 2;
FIG. 18 is a diagram illustrating an example of an image of a compression calculation due to a difference in scenario in the data processing system of FIG. 2;
FIG. 19 is a diagram illustrating an example of a configuration of a compression calculation table in the data processing system of FIG. 2; and
FIG. 20 is a block diagram illustrating an example of a detailed configuration of a data processing system in a second embodiment of the present invention.

### DETAILED DESCRIPTION

The following embodiments are divided into a plurality of sections and embodiments, when necessary for the sake of convenience. Therefore, unless clearly indicated otherwise, the divided sections or embodiments are not irrelevant to one another, but one section or embodiment has a relation of modifications, details and supplementary explanations to some or all of the other embodiments. Further, in the case where reference is made to the number, and so forth (including the number of units, a numerical value, quantity, scope, and so forth) as to elements of the following embodiment of the invention, the invention is not limited to a specified number, but the number, and so forth may be either not less than the specified number, or not more than the specified number unless explicitly stated otherwise, and unless obviously limited to the specified number on a theoretical basis.

Further, constituent elements (including a step as an element, and so forth) of the following embodiment are not always essential unless explicitly stated otherwise, and unless obviously considered essential on a theoretical basis. Similarly, when mention is made of respective shapes of constituent elements, and so forth, and position relation between the constituent elements, and so forth, in the following embodiment, the shapes, and so forth include those effectively approximate, or analogous thereto unless explicitly state otherwise, and unless obviously considered otherwise on a theoretical basis. The same can be said of the numeral value, and the scope, described as above.

### (Outline of Embodiments)

First, an outline of embodiments will be described. In the outline of the embodiments, an example will be described with corresponding components and reference numerals of the embodiments noted in parentheses.

In other words, a typical data processing system according to the embodiments is data processing system for processing data of multiple data formats (input table group 102) partially including synonymous data. The data processing system includes a first processing unit (table combination processing unit 104) that automatically combines the data of the multiple data formats, and a second processing unit (index creation unit 106) that converts the data so that the data combined by the first processing unit becomes unique to a column in specific data.

More preferably, the data processing system further includes first information (user-defined table relationship formation 101) indicative of a relationship between data defined by the user. The first processing unit performs a process for combining data of the multiple table formats with the use of the first information. The second processing unit converts the data so that the combined data becomes unique to the column in the specific data.

More preferably, the data processing system further includes second information (user-defined analysis axis information 103) indicative of a column to be analyzed which is defined by the user. The first processing unit performs a process of combining the data of the multiple data formats with the use of the first information. The second processing unit converts the data so that the combined data becomes unique to the column in the specific data defined by the user with the use of the second information.

Further, the embodiments are also applied to a data processing method and a data processing device based on the same spirit as that of the data processing system.

Hereinafter, a description will be given of the respective embodiments based on the outline of the embodiments described above with reference to the accompanying drawings in detail. In all of the drawings illustrating the respective embodiments, parts having the same function are denoted by identical symbols in principle, and its repetitive description will be omitted.

The following embodiments will be described with examples of a data processing system and a data processing method, but can also be applied to the data processing device.

### First Embodiment

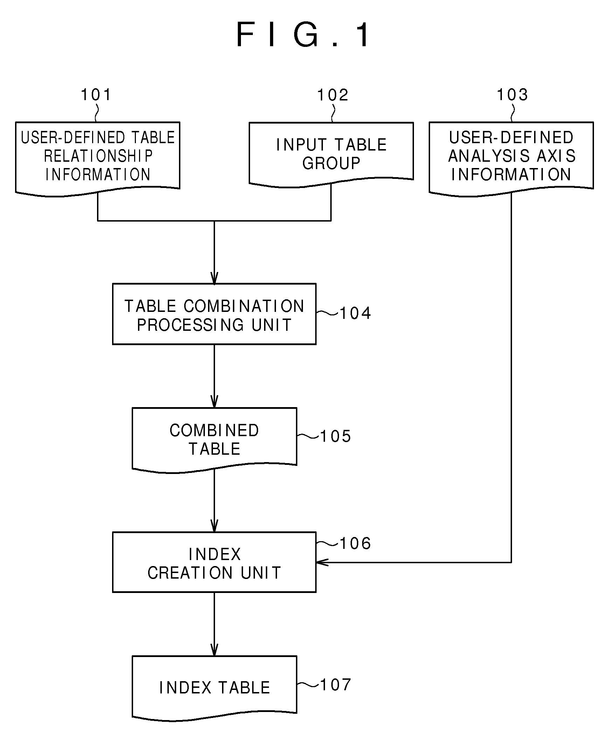

A data processing system and a data processing method according to a first embodiment will be described with reference to FIGS. 1 to 19.

### (Basic Configuration of Data Processing System)

FIG. 1 is a block diagram illustrating an example of a basic configuration of a data processing system according to the present embodiment.

The basic configuration of the data processing system according to the present embodiment includes user-defined table relationship information 101, an input table group 102, user-defined analysis axis information 103, a table combination processing unit 104, a combined table 105, an index creation unit 106, and an index table 107.

The user-defined table relationship information 101 is first information indicative of a relationship between data defined by a user. The input table group 102 is data of multiple table formats partially including synonymous data. The input table group 102 is also called "relational data" divided into multiple tables and stored therein. The user-defined analysis axis information 103 is second information indicative of a column to be analyzed which is defined by the user.

The table combination processing unit 104 is a first processing unit that automatically combines the data of the input table group 102 together. In more detail, the table combination processing unit 104 is a processing unit that performs a process of combining the data of the input table group 102 together with the use of the user-defined table relationship information 101. The combined table 105 is data of a table format combined by the table combination processing unit 104.

The index creation unit 106 is a second processing unit that converts data so that the data of the combined table 105 combined in the table combination processing unit 104 is unique to a column of specific data. In more detail, the index creation unit 106 is a processing unit that converts the data so that the data of the combined table 105 is unique to the column of the specific data defined by the user with the use of the user-defined analysis axis information 103. The unique means that a row of the table can be specified by only that column. The index table 107 is the data of the table format converted in the index creation unit 106.

In the present data processing system, the input table group 102 including one or more tables is combined together in the table combination processing unit 104 to create one combined table 105 with the use of the user-defined table relationship information 101. Then, the index table 107 is created from the combined table 105 in the index creation unit 106 with the user-defined analysis axis information 103.

In the present embodiment, it is conceivable that the table has the same concept as that of tables in a general database without any problem. However, in the present specification, the table is not limited to the table in the database, but data of a form stored in a memory region on a program can be replaced with data of any form such as a text file format or a CSV file format.

### (Detailed Configuration of Data Processing System)

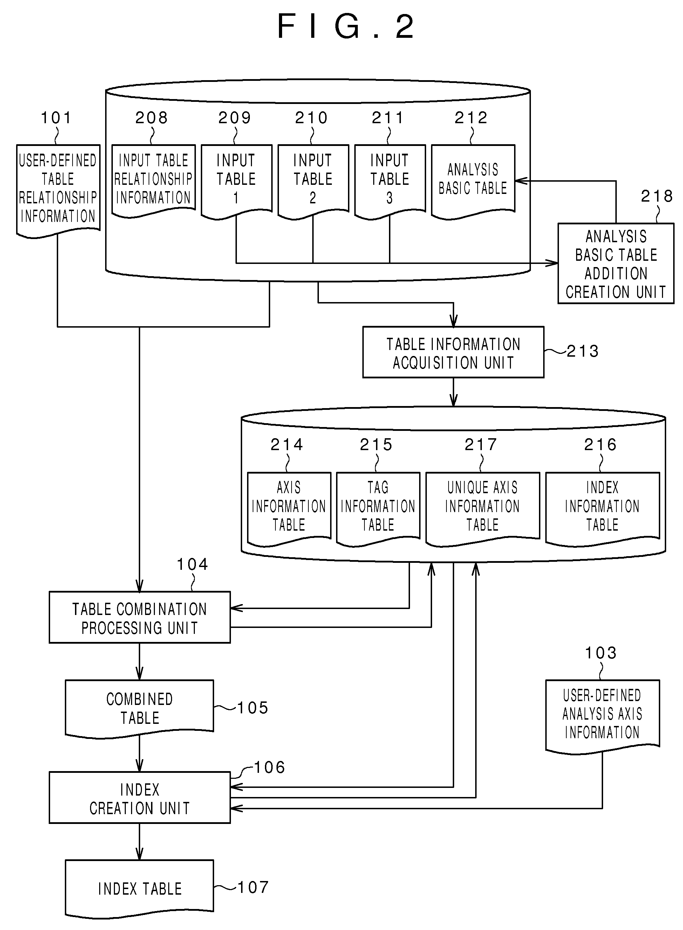

FIG. 2 is a block diagram illustrating an example of a detailed configuration of a data processing system more embodying the basic configuration of FIG. 1.

The detailed configuration of the data processing system according to the present embodiment includes the basic configuration (the user-defined table relationship information 101, the input table group 102, the user-defined analysis axis information 103, the table combination processing unit 104, the combined table 105, the index creation unit 106, and the index table 107) illustrated in FIG. 1. In addition, the detailed configuration of the data processing system includes an input table relationship information 208, an input table 1 (209), an input table 2 (210), and an input table 3 (211) which are included in the input table group 102, an analysis basic table 212, a table information acquisition unit 213, an axis information table 214, a tag information table 215, an index information table 216, a unique axis information table 217, and an analysis basic table addition creation unit 218.

The data processing system according to the present embodiment is realized with, for example, the use of a computer system. Various information and various tables such as the user-defined table relationship information 101, the input table group 102, the user-defined analysis axis information 103, the combined table 105, the index table 107, the input table relationship information 208, the input table 1 (209) to the input table 3 (211), the analysis basic table 212, the axis information table 214, the tag information table 215, the index information table 216, and the unique axis information table 217 are stored in a storage device such as a hard disk. Various function units such as the table combination processing unit 104, the index creation unit 106, the table information acquisition unit 213, and the analysis basic table addition creation unit 218 are constructed with the execution of a program of a computer software related to, for example, a data processing method on a CPU.

The input table relationship information 208 includes relationship information between the tables included in the input table group 102. The input table relationship information 208 corresponds to an external key constraint in a general RDMS (relational database management system).

The input table 1 (209), the input table 2 (210), and the input table 3 (211) are the respective input tables included in the input table group 102.

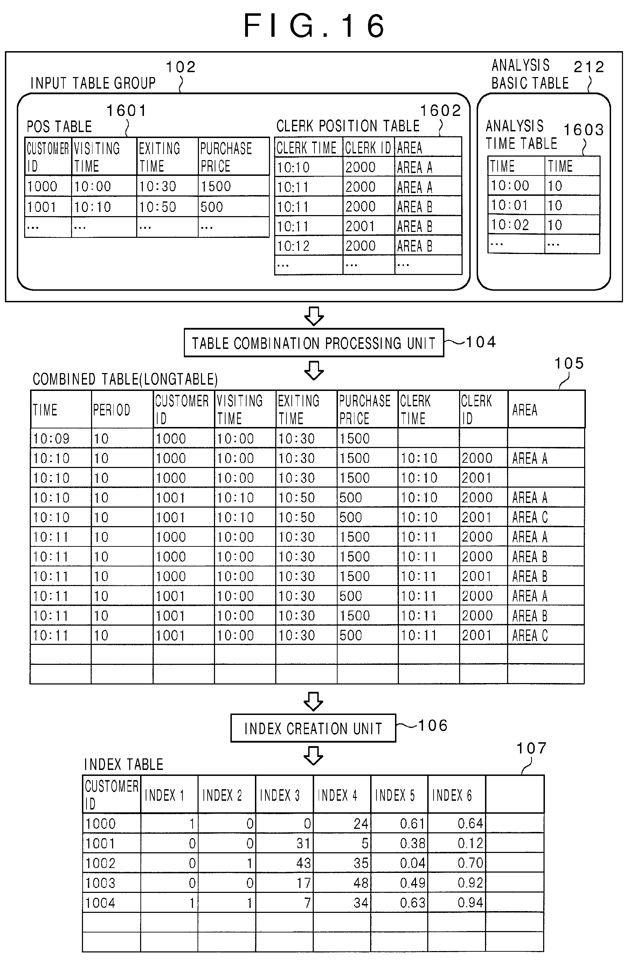

The analysis basic table 212 is a basic table required for the subsequent processing in addition to the input tables. It is conceivable that the analysis basic table 212 is an analysis time table in which a time is reclassified for each hour as shown in an example of an analysis time table of FIG. 16. In the example of the analysis time table, if data of a date and a time such as 2012/10/10 10:00 is classified for each hour, data of ten o'clock is obtained, and if the data is classified for each month, data of October is obtained. Thus, the analysis basic table 212 having multiple columns is obtained according to various classification methods.

The analysis basic table addition creation unit 218 receives the input table group 102, and creates the analysis basic table 212 described above. As a creation method, the analysis basic table addition creation unit 218 scans all of the input tables in the input table group 102, and creates the analysis basic table 212 so as to perform an interpolation between an input minimum date and time and an input maximum date and time. In this case, as a system, a default can be allocated to each of a granularity of the time in the analysis basic table 212 and the columns included in the analysis basic table 212, or the user can arbitrarily designate the granularity and the columns by some setting file. In the present embodiment, the table involved in the hour is created as the analysis basic table 212, and a table involved in a space can also be created in exactly the same manner.

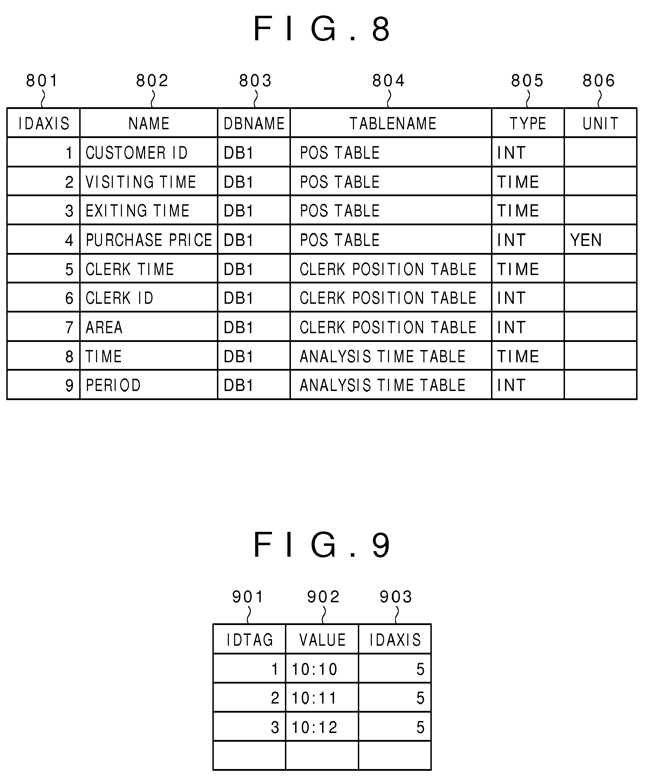

The table information acquisition unit 213 acquires table information related to the analysis basic table 212 and all tables in the input table group 102, and outputs an acquisition result to the axis information table 214, the tag information table 215, the index information table 216, and the unique axis information table 217. The respective table configurations of the axis information table 214, the tag information table 215, the index information table 216, and the unique axis information table 217, and a data acquisition method for the respective tables will be described in detail with reference to FIGS. 8, 9, 10, 11, and the description of the respective drawings.

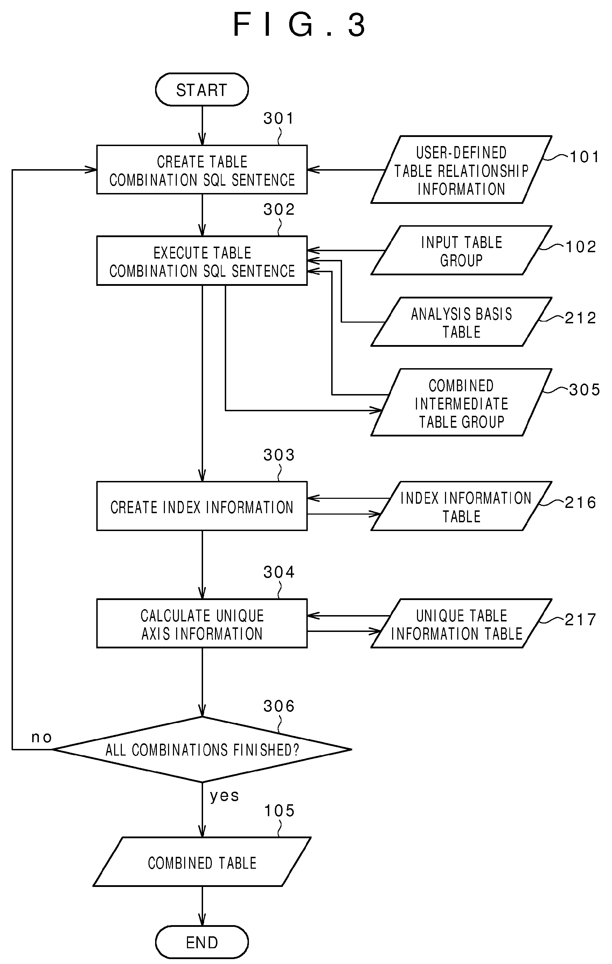

The table combination processing unit 104 receives the user-defined table relationship information 101, the input table relationship information 208, the input table group 102, the analysis basic table 212, the axis information table 214, the tag information table 215, the index information table 216, and the unique axis information table 217, and puts the input table group 102 and the analysis basic table 212 into one combined table 105. In that situation, the table combination processing unit 104 updates the unique axis information table 217 and the index information table 216 as information on the combined table 105. The details of the table combination processing unit 104 will be described with reference to FIG. 3.

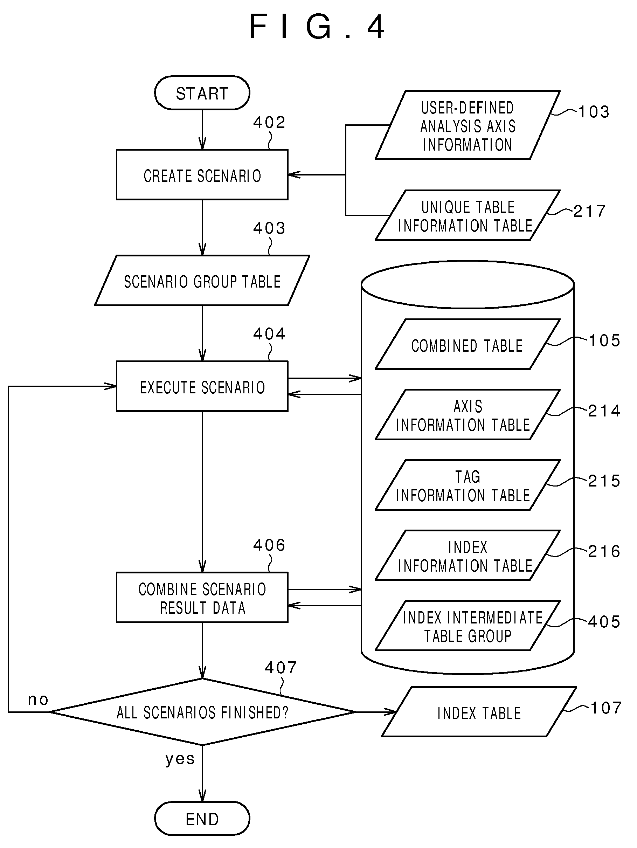

The combined table 105 put into one table by the table combination processing unit 104 is then deformed into the index table 107 on the basis of the user-defined analysis axis information 103 by the index creation unit 106. The details of the index creation unit 106 will be described with reference to FIG. 4.

### (Processing in Table Combination Processing Unit)

FIG. 3 is a flowchart illustrating an example of processing of the table combination processing unit 104.

The table combination processing unit 104 combines the multiple tables in the input table group 102 that is an input to the present system into one table. In this processing, the table combination processing unit 104 puts all of the input tables into one table, and can generate an index combining all of the tables together in the index creation unit 106. The details of the index creation unit 106 will be described later.

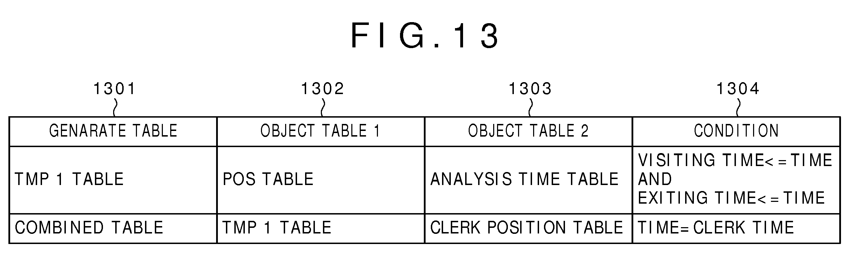

In this processing, the table combination processing unit 104 creates an SQL sentence for combining two tables together in a creation step 301 of a table combination SQL sentence with the use of the user-defined table relationship information 101. In this example, the creation of the SQL sentence will be described in detail with the use of the input table group 102 and an analysis time table 1603 in FIG. 16, and the user-defined table relationship information 101 in FIG. 13.

In the creation step 301 of the table combination SQL sentence, the table combination processing unit 104 creates the SQL sentence for combining the tables together with the use of the user-defined table relationship information 101.

In a first row of FIG. 13, the table combination processing unit 104 combines two tables of a POS table in an OBJECT TABLE 1 (1302) and an analysis time table in an OBJECT TABLE 2 (1303) together under a CONDITION 1304 as a condition to create a TMP 1 table in a GENERATE TABLE 1301. Hence, the SQL sentence to be created becomes "CREATE TABLE TMP 1 table SELECT * FROM POS table INNER JOIN analysis time table ON visiting time <= time AND exiting time >= time". The SQL sentence is described by a grammar adapted to RDMS handled by this system.

In an execution step 302 of the table combination SQL sentence, the table combination processing unit 104 gives the SQL sentence created by the creation step 301 of the table combination SQL sentence to the RDMS to execute the SQL sentence. In this situation, the input table group 102 and the analysis basic table 212 are to be executed by the SQL sentence in the RDMS. With the execution of the SQL sentence, the POS table in the OBJECT TABLE 1 (1302) and a new table including all of the columns in the OBJECT TABLE 2 (1303) are created, and added to a combined intermediate table group 305.

In a generation step 303 of index information, information on the respective columns in the TMP 1 table which is a new created table is stored in the index information table 216. In this situation, the index information created for the respective columns in the TMP 1 table is created on the basis of the index information on the POS table in the underlying OBJECT TABLE 1 (1302) and the analysis time table in the underlying OBJECT TABLE 2 (1303).

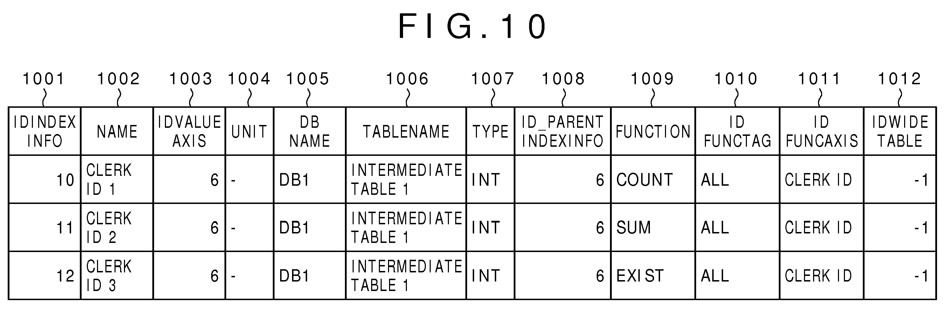

For example, a column such as a clerk time created in the TMP 1 table is created on the basis of a clerk time in a clerk position table. For that reason, in the index information table 216 of FIG. 10, the table combination processing unit 104 acquires a row in which a TABLE NAME 1006 is a clerk time table, and a NAME 1002 is the clerk time, and stores the same value as that in that row in the NAME 1002, a UNIT 1004, a DB NAME 1005, a TYPE 1007, and an ID VALUE AXIS 1003 of the new indexes. Also, the table combination processing unit 104 stores a TMP 1 table which is a new table name in a TABLE NAME 1006. The table combination processing unit 104 stores NULL in a FUNCTION 1009, an ID FUNC TAG 1010, and an ID FUNC AXIS 1011. Also, the table combination processing unit 104 stores -1 in an ID WIDE TABLE 1012.

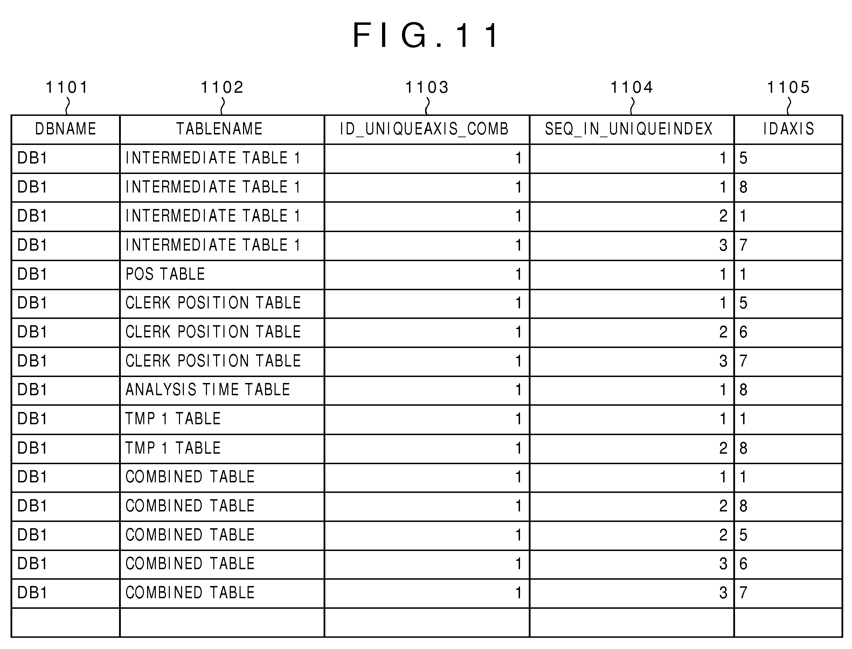

In a calculation step 304 of unique axis information, the table combination processing unit 104 stores information on the new table in the unique axis information table 217. In this example, as illustrated in FIG. 11, the table combination processing unit 104 acquires from the unique axis information table 217 that the POS table is a table unique to a clerk ID column, and the analysis time table is a table unique to the time column.

Subsequently, THE table combination processing unit 104 evaluates {visiting time <= time AND exiting time >= time} which is the CONDITION 1304. In this example, two conditions of {visiting time <=time} and {exiting time >= time} are combination conditions. Because both of those conditions are not conditions of only an equality sign but conditions having an inequality, a unique axis of the generated table becomes unique to a sum of the underlying unique axes, that is, the combination of a clerk ID column and a time column. If a condition of only the equality is present in the conditions, the unique axis of the generated table may be smaller than the sum of the underlying unique axes.

For example, a second row of the user-defined table relationship information 101 is the combination of the TMP 1 table and the clerk position table, and in this case, a CONDITION 1304 is {time=clerk time}. In this case, the unique axis combination of the TMP 1 table is {clerk ID, time}, and the clerk position table is {clerk time, clerk, ID, area}. Since the time and the clerk time have exactly the same meaning in the combined table, the unique axis combination of the generated combined tables becomes {clerk ID, time/clerk time, clerk ID, area}. In that case, as illustrated in a detailed description of FIG. 11, since the time and the clerk time have the same meaning in the unique axis information table 217, 2 which is the same order number is stored in a SEQ_IN_UNIQUE INDEX 1104.

In a determination step 306, the table combination processing unit 104 determines whether all of the combinations have been completed or not. In this example, the table combination processing unit 104 determines whether processing in all of the rows of the user-defined table relationship information 101 has been completed or not, and if not (no), the table combination processing unit 104 executes the creation step 301 of the table combination SQL sentence in a subsequent row. If all of the combination processes have been completed (yes), the combined table 105 is generated.

In this example, in the creation step 301 of the table combination SQL sentence, the table combination processing unit 104 creates the SQL sentence in which the tables are combined together with the use of the user-defined table relationship information 101. Similarly, the table combination processing unit 104 can create the SQL sentence in which the tables are combined together with the use of the input table relationship information 208 instead of the user-defined table relationship information 101. In that case, since it is found by an external key constraint in advance that a column A of the input table 1 has the same meaning as the column B of the input table 2, the table combination processing unit 104 can combine the input table 1 and the input table 2 together with the CONDITION 1304 as {column A = column B}.

Also, the table combination processing unit 104 can use both of the user-defined table relationship information 101 and the input table relationship information 208. In that case, a method of performing the combination process with the use of the input table relationship information 208 as far as possible as described above, and requesting the user to input whether there is an additional combination process or not.

### (Processing of Index Creation Unit)

FIG. 4 is a flowchart illustrating an example of processing of the index creation unit 106.

The index creation unit 106 deforms the combined table 105 into a form adapted to the analysis axis defined by the user, and creates the index table 107. The index creation unit 106 creates a lot of indexes so as to prevent the amount of information from being lost as much as possible in the deformation.

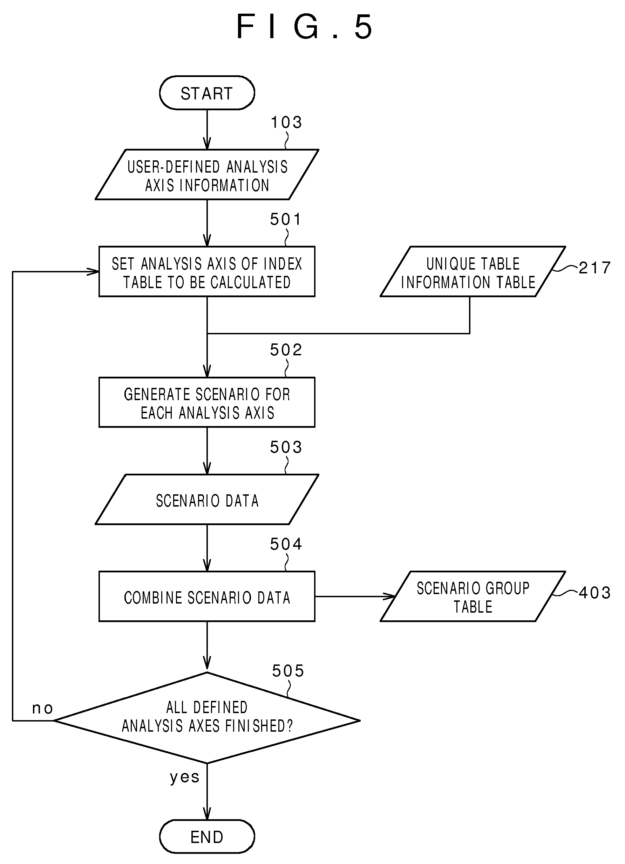

In a scenario creation step 402, the table combination processing unit 104 acquires multiple candidates of the analysis axis finally desired by the user with the use of the user-defined analysis axis information 103, and creates a scenario until the table combination processing unit 104 creates the index table 107 unique to the analysis axis from the combined table 105 with respect to each of the analysis axes. The detailed description of the create scenario 402 is illustrated in FIG. 5.

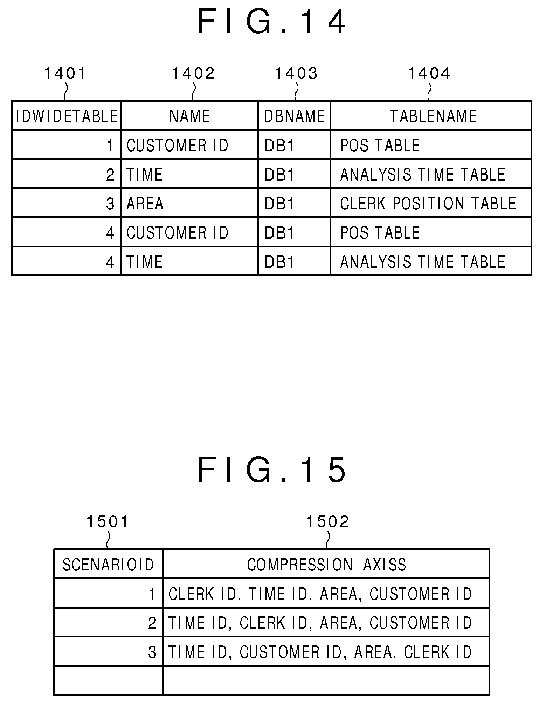

One or more scenarios created in the scenario creation step 402 are stored in a scenario group table 403. The configuration of the scenario group table 403 will be described with reference to FIG. 15.

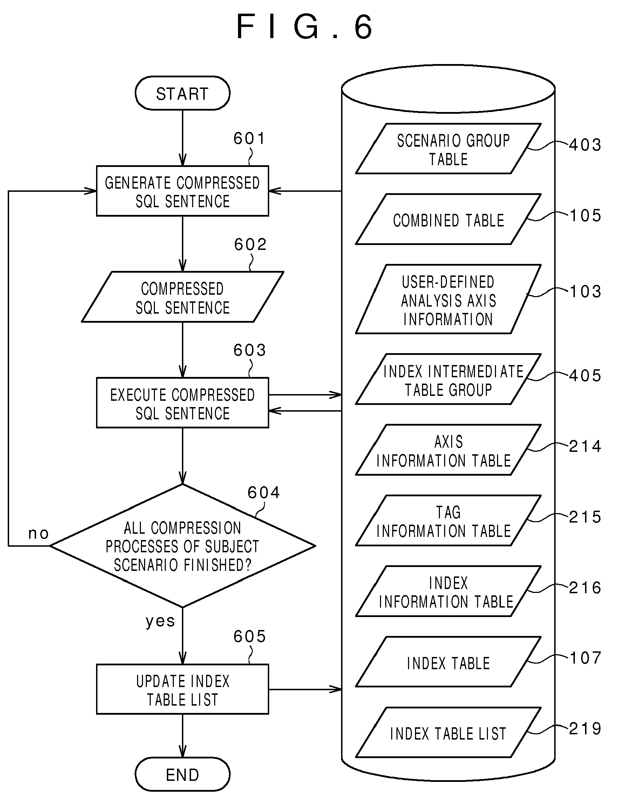

In a scenario execution step 404, a certain scenario having the scenario group table 403 is executed. The detailed description of the scenario execution step 404 is illustrated in FIG. 6.

In a scenario result data combination step 406, the table created by the scenario is combined with the index intermediate table group 405.

In a determination step 407, the table combination processing unit 104 determines whether processes in all of the scenarios included in the scenario group table 403 have been completed or not. If all of the scenarios are not completed (no), the table combination processing unit 104 returns to the scenario execution step 404, and executes unprocessed scenarios. If all of the processes have been completed (yes), a table finally created becomes the index table 107.

### (Detailed Process of Scenario Creation Step)

FIG. 5 is a flowchart illustrating an example of a detailed process of the scenario creation step 402 illustrated in FIG. 4.

In the scenario creation step 402, in a step 501 of setting the analysis axis of the index table to be calculated, the table combination processing unit 104 reads the user-defined analysis axis information 103, creates the candidates of the analysis axis of the index table 107 finally generated, and processes those candidates one by one. In an example of the user-defined analysis axis information 103 in FIG. 14, since four IDs of 1, 2, 3, and 4 are created in an ID WIDE TABLE 1401, the table combination processing unit 104 creates four index tables in total. The respective index tables are so created as to be unique to the axes of a customer ID, an hour, an area, and (customer ID and hour). In this case, the table combination processing unit 104 first creates a scenario for creating the index table (unique to the customer ID) of the ID WIDE TABLE1401=1.

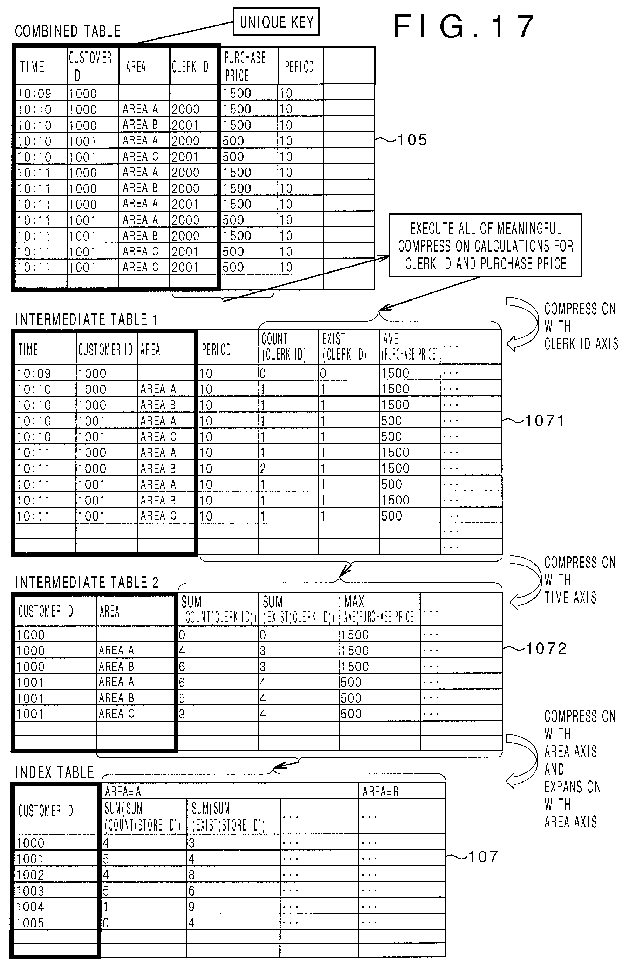

In a scenario generation step 502 for each analysis axis, the table combination processing unit 104 generates the scenario on the basis of the unique axis information table 217 and the analysis axis determined in advance. It is found from the unique axis information table 217 that the combined table is unique to the combination of {customer ID, time/clerk time, clerk ID, area}. In this example, because the combined table now needs to be so deformed as to be finally unique to the customer ID, the table combination processing unit 104 generates a scenario for deforming the combined table so as to become non-unique to the respective axes of the remaining time/clerk time, the clerk ID, and the area. In this example, let us consider a case in which the combined table is so deformed as to become non-unique in order one by one. A specific example of the deformation in a certain scenario will be described with reference to FIG. 17.

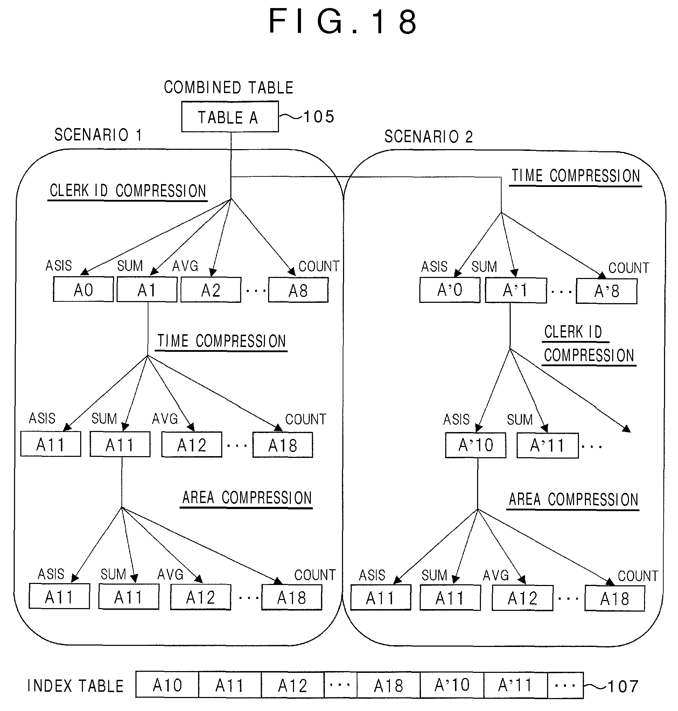

Also, an image of a compression calculation performed by multiple different scenarios with respect to the same analysis axis is illustrated in FIG. 18. In other words, the scenario defined in this example means that in what order the axes other than the axis finally left become non-unique. In that case, since there is a permutation of the three axes of the time/clerk time, and the clerk ID, triplicate scenarios are present. In other words, as the scenario data, scenario data 503 including six scenarios of {time/clerk time, clerk ID, area, customer ID}, {time/clerk time, area, clerk ID, customer ID}, {clerk ID, time/clerk time, area, customer ID}, {clerk ID, area, time/clerk time, customer ID}, {area, clerk ID, time/clerk time, customer ID}, and {area, time/clerk time, clerk ID, customer ID} are generated.

In a scenario data combination step 504, the table combination processing unit 104 stores the scenario data 503 in the scenario group table 403.

In a determination step 505, the table combination processing unit 104 determines whether the processes for all of the user-defined analysis axes have been completed or not. If all of the processes have been completed (yes), the table combination processing unit 104 completes the process in the scenario creation step 402. If all of the processes have not been completed (no), the table combination processing unit 104 performs the setting step 501 of the analysis axis in the index table to be calculated with respect to the user-defined analysis axis not processed.

### (Detailed Process of Scenario Execution Step)

FIG. 6 is a flowchart illustrating an example of a detailed process of the scenario execution step 404 illustrated in FIG. 4.

In the scenario execution step 404, the table combination processing unit 104 performs a process of generating the SQL sentence for realizing each compression process for one scenario with respect to a certain scenario, and executes the SQL sentence. An example for creating the index table 107 from the combined table 105 by a scenario (clerk ID, time/clerk time, area, customer ID) will be described.

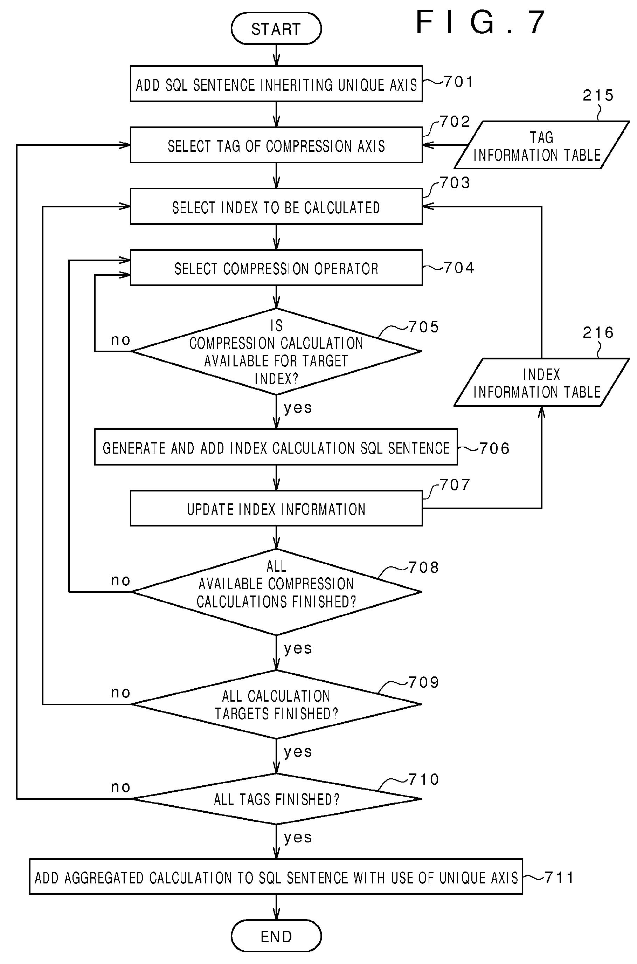

In a compression SQL sentence generation step 601, the table combination processing unit 104 generates a compression SQL sentence for realizing one compression process. The detail of this process will be described with reference to FIG. 7.

In this example, the following three compression processes are performed.

First time: The table combination processing unit 104 compresses a unique axis {clerk ID} from the unique axis combination {clerk ID, time/clerk time, area, customer ID} to create an intermediate table 1.

Second time: The table combination processing unit 104 compresses a unique axis {time/clerk time} from the unique axis combination {time/clerk time, area, customer ID} to create an intermediate table 2.

Third time: The table combination processing unit 104 compresses a unique axis {area} from the unique axis combination {area, customer ID} to create an index table.

The generated compression SQL sentence 602 is executed in a compression SQL sentence execution step 603. In this situation, a required table is called from the index intermediate table group 405, and a newly created table is stored in the index intermediate table group.

In a determination step 604, the table combination processing unit 104 determines whether all of the compression processes in the subject scenario have been completed or not. If not so (no), the table combination processing unit 104 performs the compression processes not completed in the compression SQL sentence generation step 601. If so (yes), the table combination processing unit 104 performs an update step 605 of an index table list 219.

In an update step 605 of the index table list 219, the table combination processing unit 104 stores an ID of the created index table 107 and an ID AXIS 801 of the analysis axis to which the index table 107 is unique therein. The creation of any index table 107 has been currently completed, and what is the analysis axis of the index table 107 can be listed by the index table list 219.

### (Detailed Process of Compression SQL Sequence Generation Step)

FIG. 7 is a flowchart illustrating an example of a detailed processing of a compression SQL sentence generation step 601 illustrated in FIG. 6.

In the compression SQL sentence generation step 601, the table combination processing unit 104 generates the SQL sentence for performing a certain compression in one scenario. In this case, an example of a first compression process of the scenario in the scenario execution step 404 illustrated in FIG. 6 will be described. In this process, the table combination processing unit 104 creates one SQL sentence as a whole.

In a step 701 of adding the SQL sentence that inherits the unique axis, the table combination processing unit 104 adds {time/clerk time, area, customer ID} that is the unique axis even in the compressed table from the unique axis {clerk ID, time/clerk time, area, customer ID) of the combined table before compressed to the SQL sentence. In this example, adding the SQL sentence means that the index created from the combined table is added to the SQL sentence "CREATE TABLE intermediate table 1 SELECT" which is a template of the table creation. At the time of completing the step 701,
SQL= "CREATE TABLE intermediate table 1 SELECT time, area, customer ID" is satisfied.

Since the unique axis {time/clerk time} has exactly the same meaning, any one unique axis has only to be added.

In a step 702 of selecting a tag of the compression axis, the table combination processing unit 104 selects one tag from tags having the clerk ID axis, which is an axis to be compressed this time, in an ID AXIS 903. In this example, it is assumed that a tag having a VALUE 902 = "2000" is selected.

In a step 703 of the index to be calculated, all of the indexes which do not become the unique axis of the intermediate table 1 are to be calculated from the indexes included in the combined table. The table combination processing unit 104 selects one index from the indexes to be calculated. In this example, it is assumed that an index of NAME 1002 = purchase price" is selected.

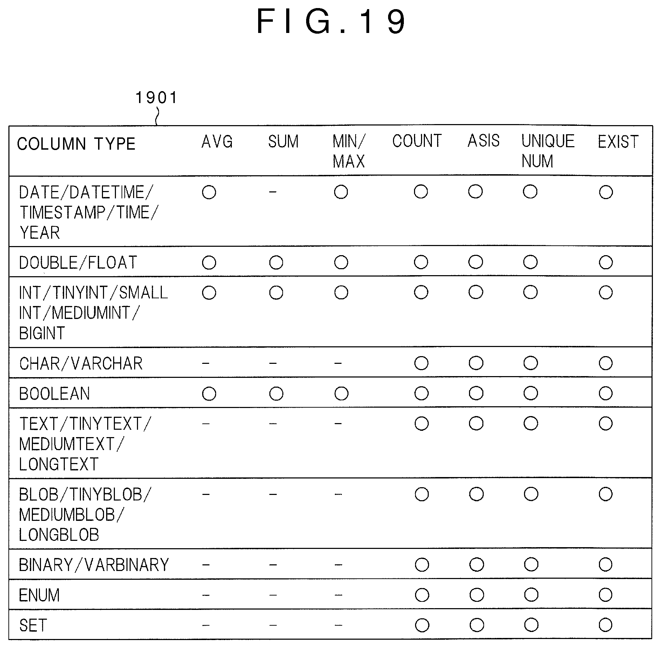

In a selection step 704 of a compression operator, the table combination processing unit 104 selects any compression operator included in the compression calculation table of FIG. 19 with respect to the indexes to be calculated by the tag of the compression axis. In this example, it is assumed that "COUNT" is selected as the compression operator.

In a determination step 705, the table combination processing unit 104 determines whether the compression calculation can be performed on the target index or not, that is, whether there is a meaning in the compression by the compression operator or not. The determination of whether there is a meaning in the compression or not, is performed according to the combination of the data type of the index in FIG. 19 with the compression operator. The data type of the index is acquired from a TYPE 1007 in the index information table 216. If there is no meaning in the compression calculation (no), the table combination processing unit 104 returns to the step 704.

If it is determined that the compression calculation is enabled (yes) in the determination step 705, the table combination processing unit 104 performs a step 706 of generating and adding the @index calculation SQL sentence. In this example, the table combination processing unit 104 adds ", COUNT (CASE WHEN clerk ID= " 2000 " purchase price IS NOT NULL THEN 1 ELSE NULL END)" to the previous SQL sentence. A generation example of the SQL sentence for all of the operators is described.
AVG:",AVG (CASE WHEN clerk ID= "2000" AND purchase price IS NOT NULL THEN purchase price ELSE NULL END)"
SUM: ", SUM (CASE WHEN clerk ID= "2000" AND purchase price IS NOT NULL THEN purchase price ELSE NULL END)"
MIN/MAX: ", MIN/MAX (CASE WHEN clerk ID= " 2000" AND purchase price IS NOT NULL THEN purchase price ELSE NULL END)"
COUNT:", COUNT (CASE WHEN clerk ID="2000" AND purchase price IS NOT NULL THEN 1 ELSE NULL END)"
ASIS:IF (COUNT (CASE WHEN clerk ID="2000" AND purchase price IS NOT NULL THEN 1 ELSE NULL END)=1, purchase price, NULL)"
UNIQUENUM:",COUNT(DISTINCT(CASE WHEN clerk ID="2000" AND purchase price IS NOT NULL THEN purchase price ELSE NULL END))"
EXIST:",IF(COUNT(CASE WHEN clerk ID="2000" AND purchase price IS NOT NULL THEN 1 ELSE NULL END)>0,1,0)"

In a step 707 of updating the index information, the table combination processing unit 104 updates information on the index to be added to the created intermediate table 1 to the index information table 216.

In this example, the table combination processing unit 104 stores the same value as the information on the target index in the NAME 1002, the DB NAME1005, and the ID VALUE AXIS 1003. Also, the compression operator name is stored in the FUNCTION 1009, the ID TAG 901 of the subject tag is stored in the ID FUNC TAG 1010, the ID AXIS 801 of the subject compression axis is stored in the ID FUNC AXIS 1011, and the intermediate table "1" is stored in the TABLE NAME 1006. Also, the table combination processing unit 104 stores the same value as the information on the target index in the UNIT 1004 if the compression operator is AVG, SUM, MIN/MAX, and ASIS, and stores NULL in the UNIT 1004 in the other cases. The table combination processing unit 104 stores the same value as the information on the target index in the UNIT 1007 if the compression operator is AVG, SUM, MIN/MAX, and ASIS, and stores INT in the UNIT 1007 in the other cases. The table combination processing unit 104 stores -1 in the ID WIDE TABLE 1012. If the compression is a last compression process of the scenario, the table combination processing unit 104 searches the user-defined analysis axes in which the unique axis is finally equal to each other from the user-defined analysis axis information 103, and stores the ID WIDE TABLE 1401 of the subject analysis axis in the ID WIDE TABLE 1012.

In a determination step 708, the table combination processing unit 104 determines whether all of the available compression calculations have been completed or not, and if not so (no), the table combination processing unit 104 returns to the step 704.

In a determination step 709, the table combination processing unit 104 determines whether all of the calculation targets have been completed or not, and if not so (no), the table combination processing unit 104 returns to the step 703.

In a determination step 710, the table combination processing unit 104 determines whether all of the tags have been completed or not, and if not so (no), the table combination processing unit 104 returns to the step 702.

If the table combination processing unit 104 determines that the processes have been completed in all steps of the determination step 708, the determination step 709, and the determination step 710 (yes), the table combination processing unit 104 performs a step 711 of adding an aggregation calculation to the SQL sentence with the use of the unique axis. In the step 711, the table combination processing unit 104 aggregates the tables with the axis to be unique in the current calculation. At that time, the table combination processing unit 104 also designates a target table. In other words, the added SQL sentence is as follows.
Added SQL sentence = "FROM combined table GROUP BY time, area, customer ID;"

With the above addition, the SQL sentence generated by this process is completed.

### (Configuration of Axis Information Table)

FIG. 8 is a diagram illustrating an example of a configuration of the axis information table 214.

All column information on all the tables in the input table group 102 is stored in the axis information table 214. In the present specification, the columns included in the input table group 102 are called "axes".

An ID uniquely allocated to each axis is stored in the ID AXIS 801.

Names of the respective axes are stored in the NAME 802. The column names of the respective tables in the input table group 102 may be stored in the NAME 802.

The table combination processing unit 104 stores a database name in which the input table having the subject axis originally stored is stored in the DB NAME 803.

The table combination processing unit 104 stores the input table name in which the subject axis is originally stored in the TABLE NAME 804.

The table combination processing unit 104 stores the data type of the subject axis in a TYPE 805. The combined table 105 can store the data types present in the normal database, such as an integer type, a string type, a time type, a date type as the data type. The table combination processing unit 104 can acquire the type in which the subject axis is stored in the input table group 102 as it is, and assign the type to the information.

A unit of the subject axis is stored in the UNIT 806. The unit can be changed by changing the axis information table 214 directly by a person, or can be changed by reading a file setting the unit of each axis in advance. Also, the user can dynamically change the unit with the use of some user interface. Also, the unit can be automatically stored with the use of the TYPE 805. For example, when the TYPE 805 is the axis of the time type, the unit can be set to seconds. Also, the unit can be automatically stored with the use of the NAME 802. For example, when the NAME 802 is the axis including a price, the unit can be set to Yen.

### (Configuration of Tag Information Table)

FIG. 9 is a diagram illustrating an example of a configuration of the tag information table 215.

All of the data included in all of the columns in all of the tables in the input table group 102 is stored in the tag information table 215. For example, when the table combination processing unit 104 acquires the tag information from a customer position table 1602 in FIG. 16, all of the unique values included in three columns of the clerk time, the clerk ID, and the area are stored as the tags. In the case of the clerk position table 1602, 10:10, 10:11, 10:12, ... are stored at the tags with respect to the axis=clerk time, 2000, 2001, ... are stored at the tags with respect to the axis=customer ID, and an area A, an area B, ... are stored as the tags with respect to the axis=area. An example of a specific storage format is illustrated in FIG. 9.

An ID for uniquely identifying the tag is stored in the ID TAG 901. If the uniqueness is kept, numbers such as serial numbers can be used.

The table combination processing unit 104 stores the value of the tag in the VALUE 902. In the example described above, when the tag of the axis=clerk time is stored, 10:10, 10:11, 10:12, ..., which are unique values of the clerk time column in the clerk position table 1602 are stored in the respective rows.

An ID indicative of the axis in which the subject tag is originally included is stored in the ID AXIS 903. This corresponds to the ID AXIS 801 described above. For example, when 10:10, which is a value of the clerk time column in the clerk position table 1602, is stored as the tag, 5 which is the ID AXIS 801 of the clerk time axis is stored in the ID AXIS 903 on the same row.

Also, not only the unique values but also the ALL TAG meaning all of the tags and the NULL TAG meaning the absence of data are stored in all of the axes as the tags in advance.

### (Configuration of Index Information Table)

FIG. 10 is a diagram illustrating an example of a configuration of the index information table 216.

Information on all the columns in all the tables generated by the present system, including the axes of the input table group 102, is stored in the index information table 216.

In the table combination processing unit 104 and the index creation unit 106, the method of creating the index information related on the columns included in the tables newly created in the present system is described with reference to FIGS. 3 and 4, respectively.

The ID uniquely assigned to each index information piece is stored in the ID INDEX INFO 1001. The ID can be configured by serial numbers.

The name of the subject index is stored in the NAME 1002.

The ID of the axis which is the original of the subject index is stored in the ID VALUE AXIS 1003, and corresponds to the ID AXIS 801.

The units of the index are stored in the UNIT 1004.

The database name in which the table having the subject index stored therein is stored is stored in the DB NAME 1005.

A table name in which the subject index is stored is stored in the TABLE NAME 1006.

The table combination processing unit 104 stores the data type of the subject axis in the TYPE 1007. The TYPE 1007 can store the data types present in the normal database, such as an integer type, a string type, a time type, a date type as the data type. An ID of the index before one stage for creating the subject index is stored in an ID_PARENT INDEX INFO 1008, which corresponds to the ID INDEX INFO 1001.

A compression operator name in creating the subject index is stored in the FUNCTION 1009.

The ID of the tag used in creating the subject index is stored in the ID FUNC TAG 1010, which corresponds to the ID TAG 901.

The ID of the axis used in creating the subject index is stored in the ID FUNC AXIS 1011, which corresponds to the ID AXIS 801.

The ID indicative of which index table the subject index belongs to is stored in the ID WIDE TABLE 1012. When the subject index is an index in a generation intermediate stage of the index table, an improper value such as -1 as the ID is put in the ID WIDE TABLE 1012 to enable identification.

When the index information is generated in the respective columns of the input table group 102 and the analysis basic table 212 by the table information acquisition unit 213, the same value as that of the axis information created for each column is stored in the NAME1002, the UNIT1004, the DBNAME1005, the TABLENAME1006, and the TYPE1007. Also, the ID VALUE AXIS 1003 stores the ID AXIS 801 of the axis information. The FUNCTION 1009, the ID FUNC TAG 1010, and the ID FUNC AXIS1011 store NULL therein. -1 is stored in the ID WIDE TABLE 1012.

### (Configuration of Unique Axis Information Table)

FIG. 11 is a diagram illustrating an example of a configuration of the unique axis information table 217.

The unique axis information table 217 is a table that stores information on in combination of which axis all of the tables related to the present system such as the respective input tables 209 to 211, the combined table 105, and the index table 107 become unique. In the present specification, a phenomenon representing such an expression that the table becomes unique to the multiple axes can be designated by only the multiple axes for the purpose of uniquely designating an arbitrary row of the subject table. This is equal to an attribute of a primary key or a unique key, which is the type of the index in a general RDMS (relational database management system).

The unique axis information table 217 is used in the scenario creation step 402 by the table combination processing unit 104 that is a process for creating the combined table 105, and the index creation unit 106 for creating the index table 107 from the created combined table 105. An actual use example is described in the respective processes. A specific storage format will be described with the use of the intermediate table 1 in FIG. 17 with reference to FIG. 11.

The name of the database in which the intermediate table 1 is stored is stored in the DB NAME 1101.

The subject table name is stored in the TABLE NAME 1102.

An ID_UNIQUEAXIS_COMB 1103 is an identifier for identifying, when multiple combinations of the axes to which the table is unique, those combinations. The intermediate table 1 of the tables in this example becomes unique to the combination of the time, the customer ID, and the area, and does not become unique to the other combinations. Therefore, the number of combinations to which the subject table becomes unique is one.

An order indicative of what number an axis indicated by the row is in the combination of the unique axes is stored in the SEQ_IN_UNIQUE INDEX 1104. Because the unique axis information table 217 stores the combination of the axes to which the table becomes unique, the subject column indicative of the order of the combination is not essential. However, if the order is known, although such information is essential in the present system, the information enables the SQL sentence executable at a higher speed in the compression SQL sentence generation step 601 made by the index creation unit 106 to be created. The details are described in the compression SQL sentence generation step 601. Also, an axis having the same meaning may occur in the processing step of the table combination processing unit 104. In that case, the number of the same order is stored in the SEQ_IN_UNIQUE INDEX 1104, and the different ID AXIS 1105 is stored therein. The axis having the same meaning is described in the table combination processing unit 104.

The ID of the axis to which the subject table is unique is stored in the ID AXIS 1105. In an example of the intermediate table 1, since the intermediate table 1 becomes unique to the three axes of the time, customer ID, and the area, the ID AXIS 801 that is an ID indicative of that axis is stored in the intermediate table 1. In this example, since the clerk time of the clerk position table and the time of the analysis time table have the same meaning in the process of creating the combined table, it should be noted that the time has two rows.

In acquiring the unique axis information on all the tables in the input table group 102 and the analysis basic table 212 by the table information acquisition unit 213, the index information on the respective tables registered in the RDMS is acquired. In other words, if a main key is set for a column A and a column B with respect to a table A of a certain database A, two records of {"database A", "table A", "1", "1", "ID AXIS of the axis indicative of the column A"} and {"database A", "table A", "1" "2" "ID AXIS of the axis indicative of the column B"} are stored in the unique axis information table 217 as the unique axis information of the subject table. In this situation, it should be noted that the number of the order of the SEQ_IN_UNIQUE INDEX 1104 follows the order set for the main key. This is because the order of the main key matches the order in which composite indexes are affixed to the database, and therefore when the SQL sentence is created in compliance with the order, the index can be used for search, and the search speed increases.

### (Configuration of Index Table List)

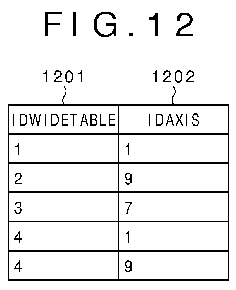

FIG. 12 is a diagram illustrating an example of a configuration of the index table list 219.

The index table list 219 is a list for managing which axis the created index table 107 is unique to.

An ID WIDE TABLE 1201 is an ID of the created index table 107, and a unique value is allocated to each index table.

An ID AXIS 1202 is an ID indicative of which axis the created index table 107 is unique to, which corresponds to the ID AXIS 801 of the axis information table 214. When the index table 107 is unique to the combination of the multiple axes, the ID WIDE TABLE 1201 in FIG. 12 can describe the ID AXIS 1202 over multiple rows.

### (Configuration of User Defined Table Relationship Information)

FIG. 13 is a diagram illustrating an example of a configuration of the user-defined table relationship information 101.

The user-defined table relationship information 101 is used for the user to combine the input table group 102 into one combined table 105. A component of such information will be described in detail. One combination operation corresponds to one row, and two tables are combined into one table by one combining operation. With the repetitive execution of such operation, the multiple tables can be converted into one combined table. The detailed flowchart has been described with reference to FIG. 3.

The name of the table created by one combining operation is described in the GENERATE TABLE 1301.

The names of the tables combined by one combining operation are described in the OBJECT TABLE 1 (1302) and the OBJECT TABLE 2 (1303).

A condition for combining the OBJECT TABLE 1 (1302) and the OBJECT TABLE 2(1303) together is described in the CONDITION 1304. The use method of those conditions has been described with reference to FIG. 3 in detail.

The user-defined table relationship information 101 is designated by the user, but the input means is not limited. In other words, the user-defined table relationship information 101 can be configured by a file per se edited in the format such as a text file or a CSV file, or information can be input from the user by a user interface of some WEB application or an application of standalone.

### (Configuration of User Defined Analysis Axis Information)

FIG. 14 is a diagram illustrating an example of a configuration of the user-defined analysis axis information 103.

In the present system, the index table 107 finally output is generated to be unique to the axis designated by the user. For example, when the user wants to perform an analysis for each customer with the use of the index table 107 generated in the present system, the index table 107 is generated to be unique to the customer ID axis. The user-defined analysis axis information 103 is information acquired from the user on which axis the index table 107 finally generated is unique to. In the method of acquiring the information, the database in which the user-defined analysis axis information 103 is stored can be changed directly by the person, or can be changed by reading the file. Also, the information can be acquired with the use of some user interface.

The multiple index tables 107 finally output can be present according to the axis to which the index table becomes unique. Also, the index table 107 finally output can be unique to the combination of the multiple axes. For example, when data of each person for every hour is dealt with, independently, and desired to be analyzed after the present system, the index table 107 unique to the combination of the time axis and the customer ID can be generated. An example of a specific storage format will be described with reference to FIG. 14.

The ID of the index table 107 designated by the user is stored in the ID WIDE TABLE 1401. Serial numbers can be merely stored in the ID WIDE TABLE 1401 if the index table 107 can be unique to the serial numbers.

The name of the axis to which the index table 107 designated by the user is unique is stored in the NAME 1402. This corresponds to one column of one table in the input table group 102.

The database name including the table having the axis to which the index table 107 designated by the user is unique is stored in the DB NAME 1403.

The name of the table including the axis to which the index table 107 designated by the user is unique is stored in the TABLE NAME 1404.

### (Configuration of Scenario Group Table)

FIG. 15 is a diagram illustrating an example of a configuration of the scenario group table 403.

The scenario group table 403 is a table that is created in the scenario creation step 402 by the index creation unit 106, and stores the compression order in performing the operation of compressing the table in the scenario execution step 404.

A SCENARIO ID 1501 is an ID for identifying each scenario. The SCENARIO ID 1501 can use serial number if the serial number is unique.

The order of the axes to be compressed in each scenario is stored in a COMPRESSION_AXISS 1502. In an example of the scenario in FIG. 17, since the clerk ID, the time, and the area are compressed in order, and the customer ID is finally left, "clerk ID, time, area, customer ID" are stored in this case. When the final index table 107 becomes unique to the multiple axes such as the area and the customer ID, the multiple axes are expressed with the use of parentheses such as "clerk ID, time, (area, customer ID)".

### (Process until Index Table is Created from Input Table Group)

FIG. 16 is a diagram illustrating an example of processing for creating the index table 107 from the input table group 102. FIG. 16 illustrates how the input table group 102 is deformed until the index table 107 is created by the present system.

In this example, the input table group 102 is configured by two input tables (POS table 1601, clerk position table 1602), and the analysis basic table 212 is configured by the analysis time table 1603 having columns of a time and an hour. The ID of the customer, a time at which the customer visits, a time at which the customer exists, and a purchase price are stored in the POS table 1601. Also, information on when and where any clerk is present is stored in columns of the clerk time, the clerk ID, and the area in the clerk position table 1602. Let us consider an example in which the index for each customer is generated from those input tables.

Those three tables are deformed into one combined table 105 by the table combination processing unit 104. The content of the specific table combination processing unit 104 has been described with reference to FIG. 3, and it is found that the input table group 102 and the analysis basic table 212 which are originally three separate tables can be deformed into one associated table by the processing results. The combined table 105 is deformed into the index table 107 by the index creation unit 106. A specific content of the index creation unit 106 and the index created in the index table 107 have been described in detail in FIG. 4, and it is found that the index table 107 is unique to the customer ID, that is, the index for each customer is generated.

### (Deformation from Combined Table to Index Table)

FIG. 17 is a diagram illustrating an example of the creation in a certain scenario in the scenario execution step 404 by the index creation unit 106. FIG. 18 is a diagram illustrating an example of an image of a compression calculation due to a difference in scenario.

FIG. 17 illustrates a specific deformation example from the combined table 105 to the index table 107 in a certain scenario. The combined table 105 is unique to the combination of {customer ID, time/clerk time, clerk ID, area}, and the intermediate table 1 is created by removing the clerk ID axis from the combination of the unique axis. In this case, in rows that are unique to the four combinations of {customer ID, time/clerk time, clerk ID, area}, rows that are not unique to the three combinations of {customer ID, time/clerk time, area} occur. In an example of FIG. 17, in the combined table 105, rows in which {time, customer ID, area, clerk ID} are {10:11, 1000, area B, 2000} and {10:11, 1000, area B, 2001} are unique to the combination of the four axes. However, when the clerk ID axis is removed from the unique axis, {time, customer ID, area} becomes {10:11, 1000, area B} and {10:11, 1000, area B}, and the uniqueness is not kept. For that reason, a calculation for compressing two rows in which {time, customer ID, area} is {10:11, 1000, area B} into one row is performed. This compression is defined as "compressed by the clerk ID axis" in the present specification.

In this situation, in order to put those two rows into one row, the calculation for compression needs to be performed on all of the columns (indexes) other than the three unique axes. For example, in the index such as the clerk ID, a compression operator such as "COUNT" indicative of how many index data is present in two rows can be provided. In this case, since two rows are put together, 2 is stored in a COUNT (clerk ID) column. All the meaningful compression calculations are performed, and a loss of the amount of information caused by the compression is reduced. In this case, the meaningless compression calculation is, for example, a minimum operator "MIN" for a string type. The kind of compression operator and meaning or no meaning of the compression operator for a data type will be described with reference to FIG. 19.

The intermediate table 1 (1701) is again compressed by the time/clerk time axis in the above manner, to thereby generate the intermediate table 2 (1702) which is unique to {customer ID, area}. Further, the intermediate table 2 (1702) is compressed by the area axis to create the index table 1605 that is unique to {customer ID}. In the above description, the available compression calculation for each index is performed in each compression process. As the index generation method, there is a method of increasing variations with the use of the tag information. In other words, in the method, as shown in an example in which the index table 107 is created from the intermediate table 2 in FIG. 17, when the compression calculation is performed for each index of the intermediate table 2, the compression calculation is classified according to the tag of the axis to be compressed. With the execution of the above operation, the information on the area can be left even after the table is compressed with the area axis. The details of the operation have been described in the compression SQL sentence generation step 601 by the index creation unit 106.

An image of the compression calculation from the combined table 105 to the index table 107 in FIG. 17 described above is an example of the scenario 1 shown in FIG. 18. Also, in FIG. 18, in an example of the scenario 2 different from the scenario 1, the intermediate table 1 is created by compressing the combined table 105 by the time axis, the intermediate table 2 is created by compressing the intermediate table 1 by the clerk ID, and the index table 107 is created by compressing the intermediate table 2 by the area.

### (Configuration of Compression Calculation Table)

FIG. 19 is a diagram illustrating an example of a configuration of the compression calculation table. In the present specification, eight operators in FIG. 19 are defined.

An AVG takes an average value of multiple rows in the target column when putting the multiple rows together.

A SUM takes a total value of the multiple rows in the target column when putting the multiple rows together.

A MIN/MAX takes a minimum value/maximum value of the multiple rows in the target column when putting the multiple rows together.

A COUNT counts the number of rows in which data is present in the target column when putting the multiple rows together.

An ASIS takes a value of the target column when putting a single row together.

An UNIQUENUM counts the number of values specific to data in the target column among the multiple rows when putting the multiple rows together.

An EXIST is set to 1 if data is present in the target column among the multiple rows when putting the multiple rows together, and set to 0 if no data is present.

Those operators can determine whether the calculation is meaningful or not, according to the data type of the respective target columns (indexes). A table 1901 in FIG. 19 is a table for determining whether the above eight calculations are each meaningful or not, according to the type of the column defined in the general RDMS. In the table, places indicated by O are meaningful in the calculation, and places indicated by - are meaningless in the calculation.

### (Advantages of First Embodiment)

As has been described above, according to the data processing system and the data processing method in the present embodiment, with the provision of the user-defined table relationship information 101, the input table group 102, the user-defined analysis axis information 103, the table combination processing unit 104, and the index creation unit 106, a loss of the amount of information of the original data is suppressed, and the multiple tables can be put together and deformed into the analysis axis desired by the user, and output. In more detail, the following advantages can be obtained.
(1) With the provision of the table combination processing unit 104 and the index creation unit 106, the table combination processing unit 104 can automatically combine data of the input table group 102 together. The index creation unit 106 can convert the data so that the data in the combined table 105 becomes unique to the column in the specific data.
(2) With the provision of the user-defined table relationship information 101, the table combination processing unit 104 can perform the process of combining the data in the input table group 102 together with the use of the user-defined table relationship information 101.
(3) With the provision of the user-defined analysis axis information 103, the index creation unit 106 can convert the data so that the data of the combined table 105 becomes unique to the column in the specific data defined by the user with the use of the user-defined analysis axis information 103.
(4) With the provision of the table information acquisition unit 213, the table information acquisition unit 213 can acquire the unique axis information table 217 indicative of the unique index of the data from the data of the input table group 102. The index creation unit 106 specifies the combination of which columns the data in the combined table 105 becomes unique to, according to the unique axis information table 217 acquired by the table information acquisition unit 213 and the user-defined table relationship information 101, and reduces the specified unique columns one by one, thereby being capable of converting the data so that the data becomes unique to the columns defined by the user.
(5) The index creation unit 106 can perform a compression calculation of at least one of obtaining an average value of the multiple rows in the column, obtaining a total value of the multiple rows in the column, obtaining a minimum value/maximum value of the multiple rows in the column, counting the number of rows in which data is present in the column, obtaining values of the column, counting the number of values specific to the data of the column, and setting 1 when data is present in the column and setting 0 when no data is present, with respect to the original column in a process of reducing the unique columns one by one, and suppress a loss of the amount of information when converting the data.
(6) The index creation unit 106 can dynamically change whether the compression calculation is performed or not, according to the data type of the target column.
(7) The index creation unit 106 can perform the compression calculation according to the value of the columns reduced in a process of reducing the unique columns one by one when performing the compression calculation.

### Second Embodiment

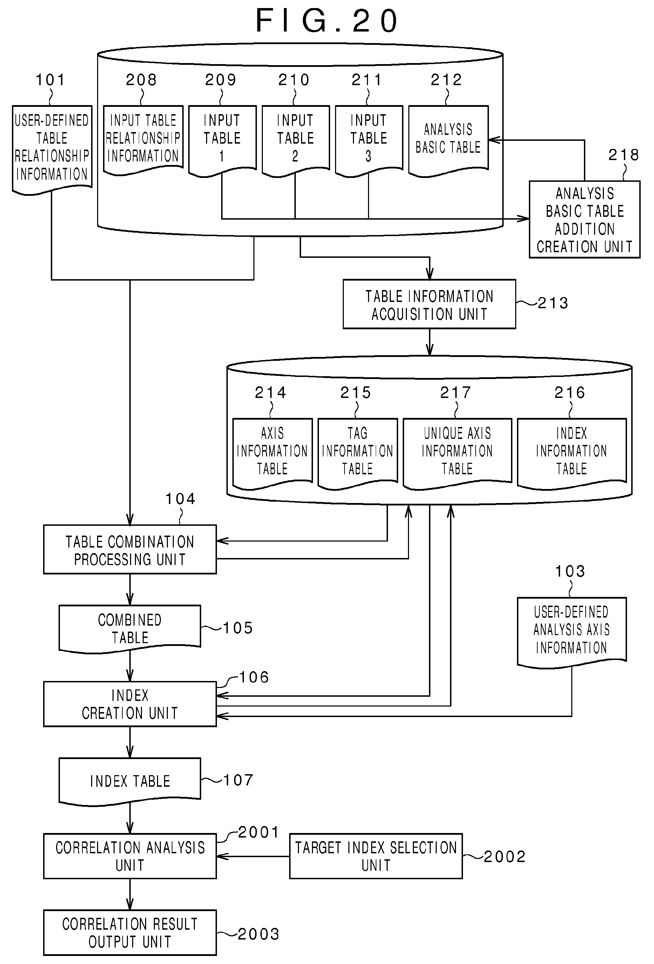

A data processing system and a data processing method according to a second embodiment will be described with reference to FIG. 20.

### (Detailed Configuration of Data Processing System)

FIG. 20 is a block diagram illustrating an example of a detailed configuration of a data processing system in the present embodiment. FIG. 20 corresponds to FIG. 2 in the first embodiment described above, but is different from the first embodiment in that there are provided a correlation analysis unit 2001 that analyzes the created index table 107, and a target index selection unit 2002 that selects the index table 107 that is a correlation target and an objective variable in the index table 107, and a correlation result output unit 2003 that outputs a correlation analysis result.

The target index selection unit 2002 first selects the index table 107 to be analyzed this time. The number of selection candidates of the index table 107 is as large as the number of analysis axes defined by the user-defined analysis axis information 103. In an example of the user-defined analysis axis information 103 in FIG. 14, since four options of each customer ID, each time, each area, and each customer IDxtime are present as the analysis axes, one analysis axis is selected from those options. Then, indexes having the same ID WIDE TABLE 1012 as the ID WIDE TABLE 1401 of the subject analysis axis are searched from the index information table 216, and a target index to be analyzed this time is selected from the searched indexes. Those selections can be predetermined by a setting file, or can be interactively performed with the use of a CUI or a GUI.

The correlation analysis unit 2001 analyzes other indexes that correlate with the target index selected in the index table 107 selected by the target index selection unit 2002. In this example, the correlation includes not only a one-to-one correlation analysis but also one-to-many multiple regression analysis, a non-linear logistic regression, or a generalized linear model.

The correlation result output unit 2003 outputs a result analyzed by the correlation analysis unit 2001. As the format of the output, the correlation result output unit 2003 can display a regression equation, a determination coefficient, and a significance probability in a text content. In the case of a double regression analysis, a one-to-many relationship can be visualized in a correlation network diagram.

### (Advantages of Second Embodiment)

As described above, according to the data processing system and the data processing method of the present embodiment, with the provision of the correlation analysis unit 2001, the target index selection unit 2002, and the correlation result output unit 2003, the following advantages can be obtained as the advantages different from those in the first embodiment. For example, with the selection of the objective variable in the index table 107 by the target index selection unit 2002, the correlation analysis unit 2001 can analyze other variables that correlate with the target variable, create models with the other variables, and output the models from the correlation result output unit 2003.

The respective embodiments of the invention made by the present inventors have been described above. However, the present invention is not limited to the above embodiments, and includes various modified examples without departing from the spirit of the present invention. For example, in the abovementioned embodiments, in order to easily understand the present invention, the specific configurations are described. However, the present invention does not always provide all of the configurations described above. Also, a part of one configuration example can be replaced with another configuration example, and the configuration of one embodiment can be added with the configuration of another embodiment. Also, in a part of the respective configuration examples, another configuration can be added, deleted, or replaced.

For example, in the above embodiments, the data processing system and the data processing method have been illustrated. However, the present invention is not limited to those configurations, and can also be applied to a data processing device. The data processing device can be realized in the same manner by housing the components illustrated in FIGS. 1, 2, or 20 in one device housing.

## Claims

1. A data processing system for processing data of a plurality of table formats partially including synonymous data, comprising:
a first processing unit that automatically combines the data of the plurality of table formats together; and
a second processing unit that converts the data so that the data combined in the first processing unit is unique to a column in specific data.

2. The data processing system according to claim 1, further comprising first information indicative of a relationship between data defined by a user,
wherein the first processing unit performs a process of combining the data of the plurality of table formats together with the use of the first information, and
the second processing unit converts the data so that the combined data is unique to the column in the specific data.

3. The data processing system according to claim 2, further comprising second information indicative of a column to be analyzed which is defined by the user,
wherein the first processing unit performs a process of combining the data of the plurality of table formats together with the use of the first information, and
the second processing unit converts the data so that the combined data is unique to a column in the specific data defined by the user with the use of the second information.

4. The data processing system according to claim 3, further comprising a third processing unit that acquires third information indicative of a unique index of data from the data of the plurality of table formats,
wherein the second processing unit specifies to the combination of which columns the combined data becomes unique from the third information acquired by the third processing unit and the first information, reduces the specified unique columns one by one, and converts the data so that the data is unique to the columns defined by the user.

5. The data processing system according to claim 4, wherein the second processing unit performs a compression calculation of at least one of obtaining an average value of a plurality of rows on the original columns, obtaining a total value of the plurality of rows in the column, obtaining a minimum value/maximum value of the plurality of rows in the column, counting the number of rows in which data is present in the column, obtaining value of the column, counting the number of values specific to the data of the column, and setting 1 when data is present in the column and setting 0 when no data is present, with respect to the original column in a process of reducing the unique columns one by one, and suppresses a loss of the amount of information when converting the data.

6. The data processing system according to claim 5, wherein the second processing unit dynamically changes whether the compression calculation is performed or not, according to a data type of the target column.

7. The data processing system according to claim 5, wherein the second processing unit performs the compression calculation according to the value of the column reduced in the process of reducing the unique columns one by one when performing the compression calculation.

8. The data processing system according to claim 7, further comprising a fourth processing unit that selects a target variable in the table where the compression calculation is performed to create a model with another variable.

9. A data processing method for processing data of a plurality of table formats partially including synonymous data, comprising:
as a first step, automatically combining the data of the plurality of table formats by a first processing unit; and
as a second step, converting the data so that the data combined in the first processing process is unique to a column in specific data by a second processing unit.

10. The data processing method according to claim 9,
wherein in the first process, the first processing unit performs a process of combining the data of the plurality of table formats together with the use of first information indicative of a relationship between the date defined by a user, and
in the second process, the second processing unit converts the data so that the combined data is unique to the column in the specific data.

11. The data processing method according to claim 10,
wherein in the first process, the first processing unit performs a process of combining the data of the plurality of table formats together with the use of the first information, and
in the second process, the second processing unit converts the data so that the combined data is unique to a column in the specific data defined by the user with the use of second information indicative of a column to be analyzed which is defined by the user.

12. A data processing device for processing for processing data of a plurality of table formats partially including synonymous data, comprising:
a first processing unit that automatically combines the data of the plurality of table formats together; and
a second processing unit that converts the data so that the data combined in the first processing unit is unique to a column in specific data,
wherein the first processing unit and the second processing unit are housed in one device housing.

13. The data processing device according to claim 12, further comprising first information indicative of a relationship between data defined by the user,
wherein the first processing unit performs a process of combining the data of the plurality of table formats together with the use of the first information, and
the second processing unit converts the data so that the combined data is unique to the column in the specific data.

14. The data processing device according to claim 13, further comprising second information indicative of a column to be analyzed which is defined by the user,
wherein the first processing unit performs a process of combining the data of the plurality of table formats together with the use of the first information, and
the second processing unit converts the data so that the combined data is unique to a column in the specified data defined by the user with the use of the second information.

15. The data processing system according to claim 1, wherein the unique means that a row of the table can be specified by only the column.
